Europäisches Patentamt

European Patent Office

Office européen des brevets

(19)

(11) Publication number: **0 056 606**
**A1**

## (12) EUROPEAN PATENT APPLICATION

(21) Application number: **82100171.6**

(22) Date of filing: **12.01.82**

(51) Int. Cl.³: **H 02 K 3/47**
**H 02 K 3/04**

(30) Priority: **19.01.81 US 226335**

(43) Date of publication of application:
**28.07.82 Bulletin 82/30**

(84) Designated Contracting States:
**BE DE FR GB**

(71) Applicant: **WESTINGHOUSE ELECTRIC CORPORATION**
**Westinghouse Building Gateway Center**
**Pittsburgh Pennsylvania 15222(US)**

(72) Inventor: **Nathenson, Richard David**
**5301 Fair Oaks St.**
**Pittsburgh Pennsylvania(US)**

(74) Representative: **Fleuchaus, Leo, Dipl.-Ing. et al,**
**Fleuchaus & Wehser Melchiorstrasse 42**
**D-8000 München 71(DE)**

(54) **Stator coil support structure for a superconducting dynamoelectric machine.**

(57) A stator coil support structure is provided that comprises both a rigid, non-conductive structure (20,62) for encasing the spiral pancake coils (12) of a dynamoelectric machine and flexible, non-conductive support means (110,112) disposed adjacent each turn (14) of the pancake coils (12) between each turn (14) and its adjacent portion of the rigid structure (20,62). The structure provides support for the stator coil structure while permitting a slight movement of each pancake coil turn (14) to prevent excessive strain on the coil turns (14).

./...

EP 0 056 606 A1

FIG.2

FIG.8

1

## STATOR COIL SUPPORT STRUCTURE FOR A SUPERCONDUCTING DYNAMOELECTRIC MACHINE

The present invention relates to a dynamoelectric machine comprising a frame structure, a stator structure and a rotor, and in particular relates to support systems for the stator coils of the dynamoelectric machine, and specifically to support systems for the spiral pancake stator coils of superconducting generators. The superconducting generators consist of a supercooled rotor winding combined with a non-superconducting stator winding but the stator coil support structure.

Spiral pancake stator windings are constructed of individual coils that spiral outwardly from a radially inner stator boundary to a radially outer stator boundary. This type of stator winding structure has certain advantages and provides effective radial and tangential securement for each of the individual electrical coils and is disclosed in the Specification of U.S. Patent No. 4,151,433.

To assure reliable operation of the superconducting generator, the stator coils must be securely fastened to avoid damage that can be caused by wear or fatigue.

The present invention provides the pancake coil support, but it also prevents the accumulation of additive loads from coil to coil while providing a means of support for the entire stator winding assembly that maintains the relative position of the stator coils to the generator's rotor winding.

The function of any stator coil support structure is twofold. First, it must maintain the position of the stator coils relative to the field winding of the generator rotor, thus assuring a predetermined magnetic coupling between the rotor and stator coils and, therefore, the production of active power from the generator. Secondly, it must prevent damage to the stator coil structure caused by steady state, thermal cycle or fault induced forces.

Steady state loading conditions tend to produce forces that are small in magnitude but of frequencies which correspond to the generator's excitation frequency, for example, 60 Hz and its associated harmonics. These forces necessitate provisions to maintain tightness and prevent wear and fatigue of the stator coil and its supporting structure. It is also necessary to assure that the support structure does not have natural frequencies in the range of these excitation frequencies. Thermal cycles, on the other hand, tend to produce large differential expansions between stator components which, when restrained, must be accommodated without causing excessive loads on the stator components. Loads that are caused by line fault conditions expose the stator winding to very high forces of short duration. The support structure must be designed in such a way that these loads do not produce stresses and strains beyond the limits of the stator components.

In any type of generator it is advantageous to limit the loads to which the stator winding is subjected, especially in a superconducting generator where the forces will be higher than a conventional generator of a similar rating. The present invention describes a support structure which can be used with a spiral pancake stator winding to reduce the loads on the spiral pancake winding and on each individual turn of that winding. It is constructed of non-conductive materials which are compatible with the magnetic and electrical fields that exist in the vicinity of the airgap of generators. The stator coils are encased within a rigid non-conductive structure which permits a slight relative motion of the coils' individual turns in order to minimize stress and strain of these individual conductors.

According to the present invention, a dynamoelectric machine comprises a frame structure, a stator structure, and a corresponding rotor, said stator structure having a plurality of conductive stator coils, each of said plurality of conductive stator coils being disposed within a substantially cylindrical stator winding assembly of said coils, each of said plurality of conductive stator coils comprising a plurality of conductive turns, and a substantially rigid insulative means for supporting said stator winding assembly, said rigid insulative supporting means providing support to said stator winding assembly in radial, tangential, and axial directions, and also preventing contact between adjacent ones of said plurality of conductive turns.

The invention furthermore includes a method of supporting concentrically wound stator coils of a dynamoelectric machine comprising supporting each stator coil in a radially outward direction with an insulative outer skin, separating each turn of said concentrically wound stator coil from its adjacent turns with an insulative separator, attaching said insulative separator to said inner skin and to said outer skin, forming an insulative substantially rigid encasement about each of said stator coils, combining a plurality of said encasements in an overlapping association to form a cylindrical assembly, said assembly having an inside diameter and an outside diameter, supporting said cylindrical assembly in a radially outward direction with a substantially rigid insulative cylinder, supporting said cylindrical assembly in a radially inward direction with a substantially rigid insulative cylinder, and forming the outer cylindrical surface of the outwardly supporting rigid insulative cylinder into a plurality of flat chordal surfaces.

4

The invention will now be described, by way of example, with reference to the accompanying drawings, in which:

Figure 1 is a depiction of a stator winding assembly with an exploded view of an individed pancake coil.

Figure 2 shows a pancake coil disposed within a nonconductive encasement.

Figure 3 is a sectional view of the encasement of Figure 2.

Figures 4A through 4D show alternate forms of the cross-sectional view of the encasement of Figure 3.

Figure 5 depicts an assembled stator coil support structure of one of the alternate preferred embodiments described below.

Figure 6 shows a support plate used with the central section of the pancake coil structure.

Figure 7 shows a support plate used with the end turn section of the pancake coil structure.

Figure 8 shows the method of assembling the pancake coil L-shaped segments within the support plates of Figure 6.

Figure 9 shows a stator coil support structure comprising the support plates of Figures 6 and 7.

Figure 10 shows the assembly of springs used in conjunction with one alternative embodiment within the rectangular holes of the support plates of Figure 6 or 7.

The present invention pertains to a support structure for the stator coils of a dynamoelectric machine and, more particularly, for the pancake coils of a superconducting generator. It provides generally rigid support for the entire stator coil assembly while accommodating small relative motion between the individual turns of each pancake coil. The support structure of the present invention comprises non-conductive elements that can be constructed in either of two preferred embodiments, either of which could be preferred depending upon manufacturing or economical consideration external to the functional operation of stator coil support structure.

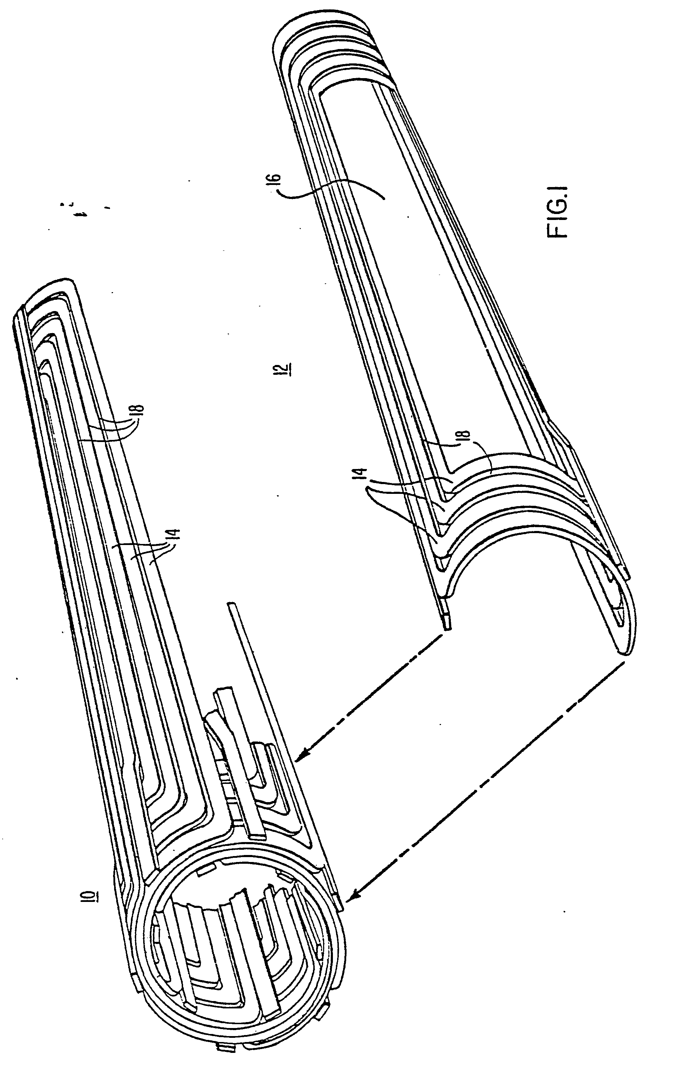

Figure 1 shows a typical stator winding assembly 10 of pancake coils 12 to which the present invention is especially applicable. The exploded view illustrates the pancake coil 12 with its concentric turns 14 wound about an opening or coil window 16. The turns 14 are separated by an interturn gap 18. During operation of the dynamoelectric machine of which the stator windings are a part, the loads described above create forces which tend to create relative motion between adjacent turns 14. If these forces are permitted to operate on the pancake coils in an unrestrained manner, distortions could cause strains beyond the limits of the conductive material of the pancake coil 12 or possible exceed the interturn gap 18 and cause harmful abrasions between adjacent turns 14. On the other hand, if the turns 14 are so tightly constrained that even minimal relative motion is prevented, the resultant stresses on the individual turns 14 may exceed the limits of the conductive material and cause damage.

As shown in Figure 1, the pancake coils 16 are concentrically disposed in the stator winding assembly 10 in an overlapping manner. If not properly supported, one pancake coil 12 can transfer forces to an adjacent, overlapping pancake coil creating a cumulative effect which may achieve harmful proportions if the additive forces are applied to a single individual pancake coil 12.

As described above, the present invention can be applied in two different preferred embodiments. These will be described separately.

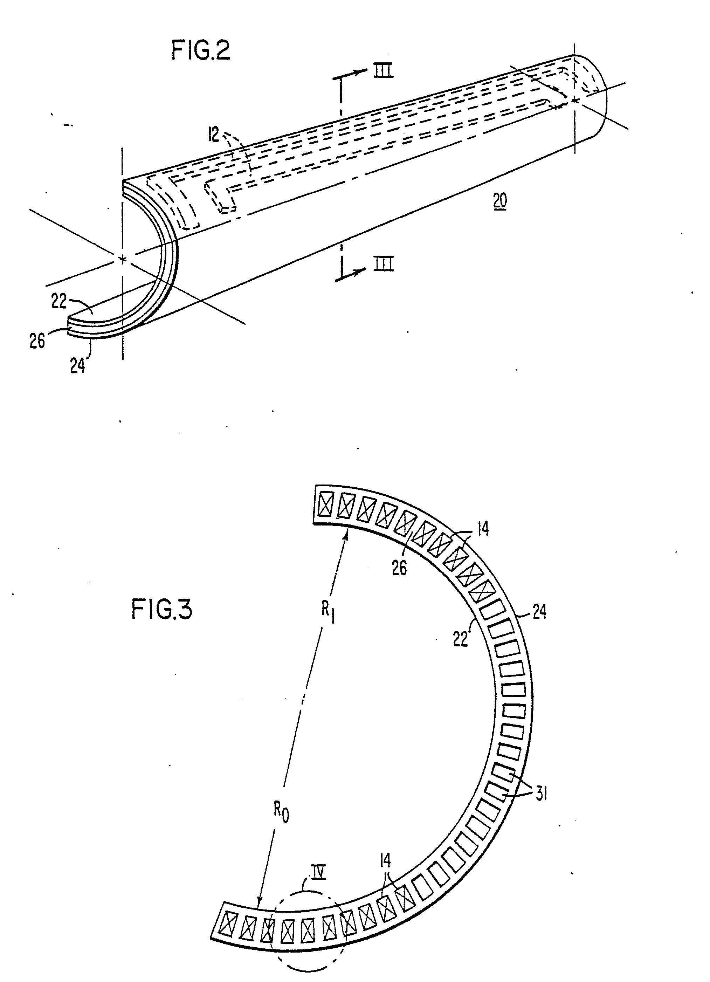

The first embodiment of the present invention comprises a non-conductive encasement 20, shown in Figure 2, for each pancake coil 12. The encasement 20 is constructed of an inner skin 22, an outer skin 24 and webbing 26, all made of a non-conductive material such as a glass-epoxy composite. The encasement 20 is generally in the shape of a single pancake coil 12, namely a shell-like structure that can be combined with other such structures to form a generally cylindrical body coaxial with the stator structure by overlapping each encasement 20 with others in an aoutwardly spirally configuration, with the pancake coil 12 disposed between the inner 22 and outer 24 skin. Between the inner 22 and outer 24 skins and positioned adjacent the individual turns of the pancake coil, the webbing 26 serves the function of filling the inner skin spaces not occupied by the pancake coil 12. Together with the inner 22 and outer 24 skins, the webbing 26 completes the encasement of the pancake coil 12 and limits the movement of each individual turn. The individual turns of the pancake coil are cradled in the openings formed by the non-conductive structural members. When subjected to loads each turn transfers its forces to the webbing 26 or skins (22 and 24) which are then transmitted eventually to outer members of the support structure. Therefore, each turn of each pancake coil and pancake coil itself experience only their own loads and not the cumulative loads from other turns and coils. As can be seen in Figure 2, the typical structure of the pancake coil 12 necessitates that, in order for the webbing 26 to always be parallel to the individual turns of the coil, the webbing 26 runs in a generally peripheral direction in the end regions of the encasement 20 and in a generally axial direction in the main or central region of the encasement 20.

Figure 3 is a section view of the encasement structure of Figure 2. It shows the axially running webbing 26, the inner 22 and outer 24 skins. The section view shows both channels that are empty 31 and ones that are filled with turns 14 of the pancake coil. The empty channel zone could be replaced with a solid, non-conductive filler piece if desired. The method depicted, using empty channels 31, has the advantages of reducing the overall weight of the structure and allowing the total encasement to be constructed with similar components and methods. As shown in Figure 3, the cross-section of the encasement is not a section of a cylinder. That is, $R_0$ and $R_1$ are not equal. This is necessary due to the overlapping assembly techniques which are known to those skilled in the art of the use of pancake coils and which will be obvious from the discussion below.

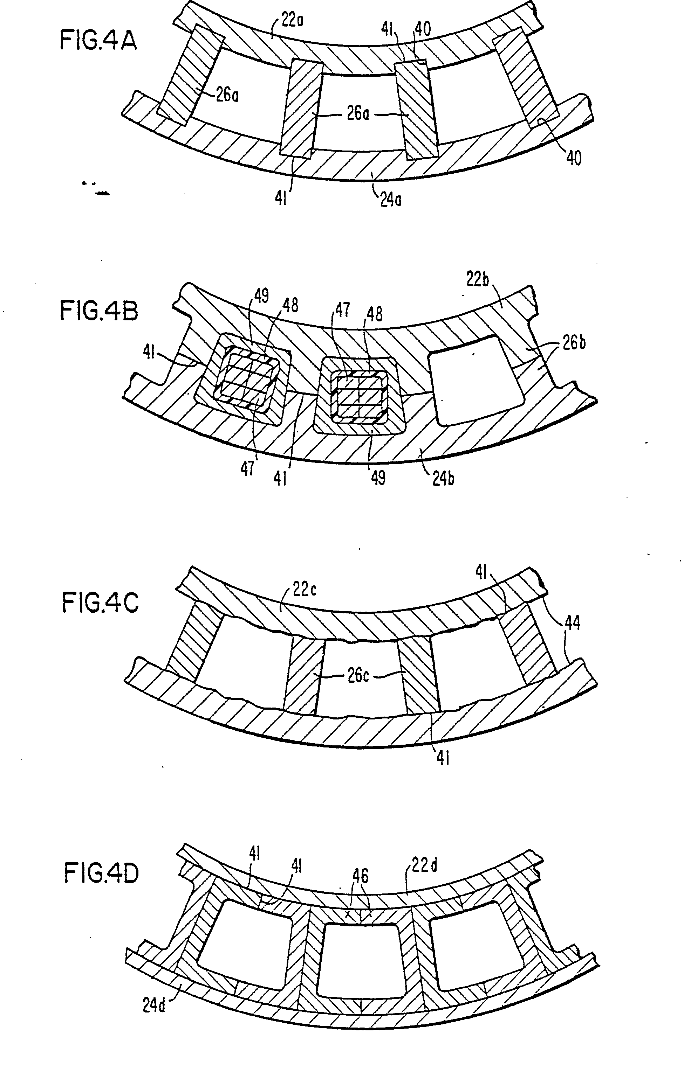

Figures 4A through 4D show variations that are possible in the construction of the encasement of the present invention, all of which can be depicted as the circle section view of Figure 3. In Figure 4A, the webbing is shown as 26a which fits into grooves 40 in both the inner 22a and outer 24a skins. This configuration uses three types of components, which are fastened to each other with a suitable bonding agent 41. Figure 4B shows a design alternative that incorporates the webbing 26b as part of both the inner 22b and outer 24b skins. This configuration utilizes two molded components which are bonded 41 together. Figure 4C is a variation of 4A, but with no grooves. Instead, the inner 22c and outer 24c skins have a roughened surface 44 which can be securely bonded 41 to corresponding rough surfaces of the webbing 26c. Figure 4D shows a configuration which comprises U-shaped channels 46 which are bonded to each other in pairs to form a rectangular channel which cradles each coil turn. The U-shaped channels 46 are then further encased in an inner 22d and outer 24d skin between which they serve the function of the webbing in the other three configurations of Figure 4. The channels 46 allow the use of thinner inner and outer skins.

Regardless of the particular configuration chosen, the inner and outer skins form a rectangular channel with the webbing components in which the coil turn is cradled. Figure 4B illustrates this, showing the conductor 47 of the turn surrounded by a suitable insulative material 48. Between the inner surface of the rectangular channel and the outer insulative surface 48 of the coil turn, a non-rigid material 49 is disposed to permit a small relative movement of the coil turn. This material 49 prevents stresses from occurring caused by small potential motions of the coil turns that are completely restrained. However, loads of a greater magnitude are absorbed by the rigid components of the encasement structure.

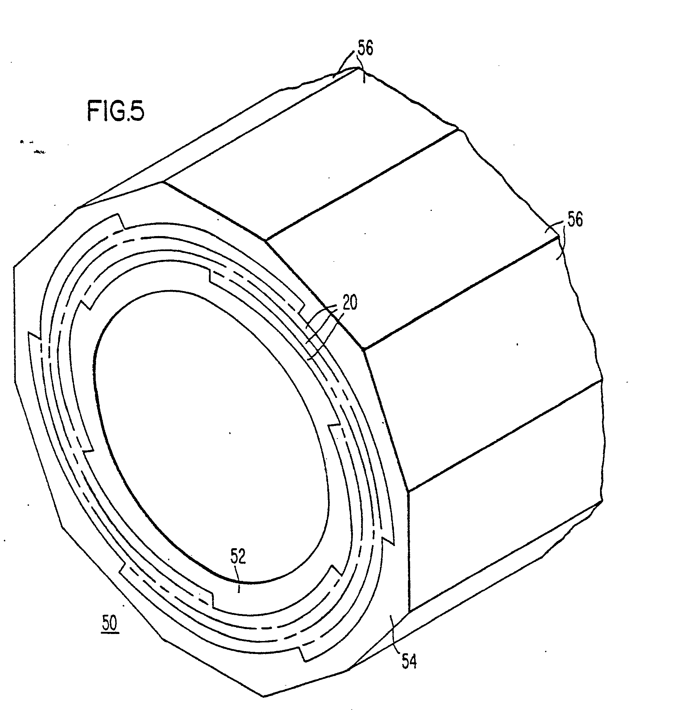

When each pancake coil is encased as described above, a plurality of the coils are assembled in a concentric overlapping stator coil structure as depicted in Figure 5. The encased pancake coils 20 are disposed about an inner non-conductive cylindrical tube 52 which exerts a supporting force in a radially outward direction. An outer non-conductive cylindrical tube 54 is then disposed about the pancake coils. The entire assembly 50 is then assembled in any suitable stator structure (not shown). The outer cylindrical tube 54 may be constructed with a plurality of flat chordal surfaces 56 in its outer surface for the purpose of securing the assembly 50 to the stator structure to prevent rotational movement of the assembly 50 relative to that stator structure.

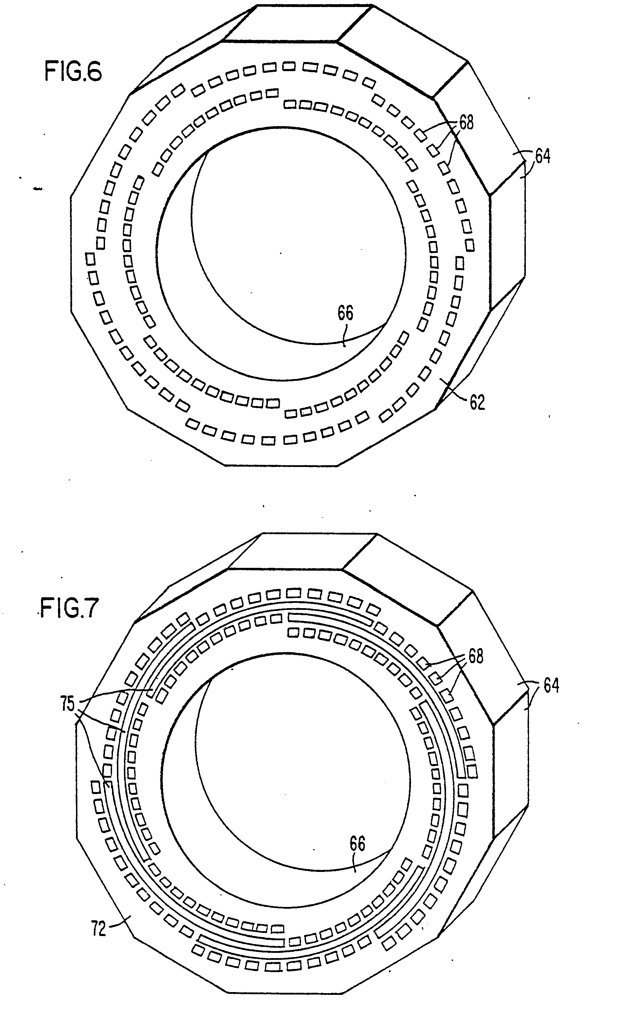

The present invention can alternatively be configured in an apparently different but functionally similar embodiment of the stator coil support structure. Figures 6 and 7 show the plates that comprise this alternative structure.

Figure 6 shows a generally circular nonconductive plate 62 with an outside diameter shaped into a plurality of flat choral surfaces 64 and with a circular hole 66 through the center of the plate 62. The size of the hole 66, as will be seen, is determined by the size of the rotor and desired air gap of the electrical machine of which the present invention will be a part. The plate 62 has a plurality of generally rectangular holes 68 therethrough. These holes are sized to allow the insertion of the straight segment of the pancake coil turns.

Figure 7 shows a generally circular nonconductive plate 72 which is similar to the plate in Figure 6 in all respects except that it also has arc-shaped channels 75 therethrough. These channels 75 provide space for the arc-shaped end sections of the pancake coil turns. Similar to the plate 62 of Figure 6, the plate 72 of Figure 7 has a plurality of generally rectangular holes 68 therethrough, a circular hole 66 through its center and a plurality of chordal surfaces 64 shaped into its outside surface.

Comparing plates 62 of Figure 6 and 72 of Figure 7, they combine to form the total stator coil support structure of the present invention with the plates 72 being used to support the end sections of the pancake coils and the plates 62 being used to support the center, straight sections of the pancake coil.

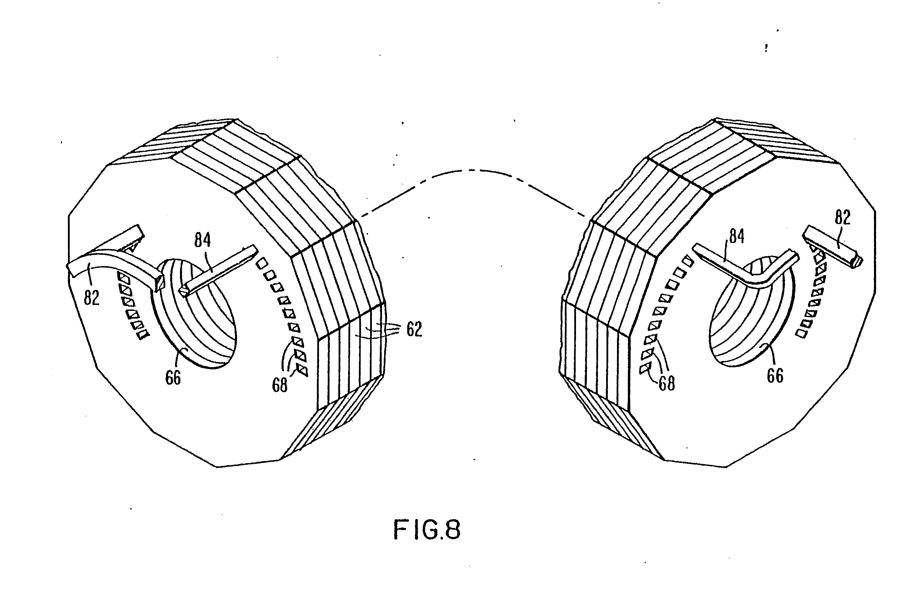

The non-conductive plates (62 and 72) are stacked together with their central circular holes 66 coaxial and with their generally rectangular holes 68 aligned. Figure 8 shows the front and rear views of this stacked assembly. For visual clarity only the straight section plates 62 are shown in Figure 8. The pancake coil is assembled from a plurality of L-shaped segments (82 and 84). The straight section of the L-shaped segments are inserted through the aligned rectangular holes 68. Although Figure 8 shows only two L-shaped segments (82 and 84), it should be obvious that an entire pancake coil can be assembled and brazed together using the method described above at which time the remaining pancake coils could be similarly assembled until the stator coil structure is complete. Furthermore, the plates (72 of Figure 7) with end section openings are then stacked at each end of the assembly of Figure 8 to accommodate the curved segment of the L-shaped coil sections (82 and 84).

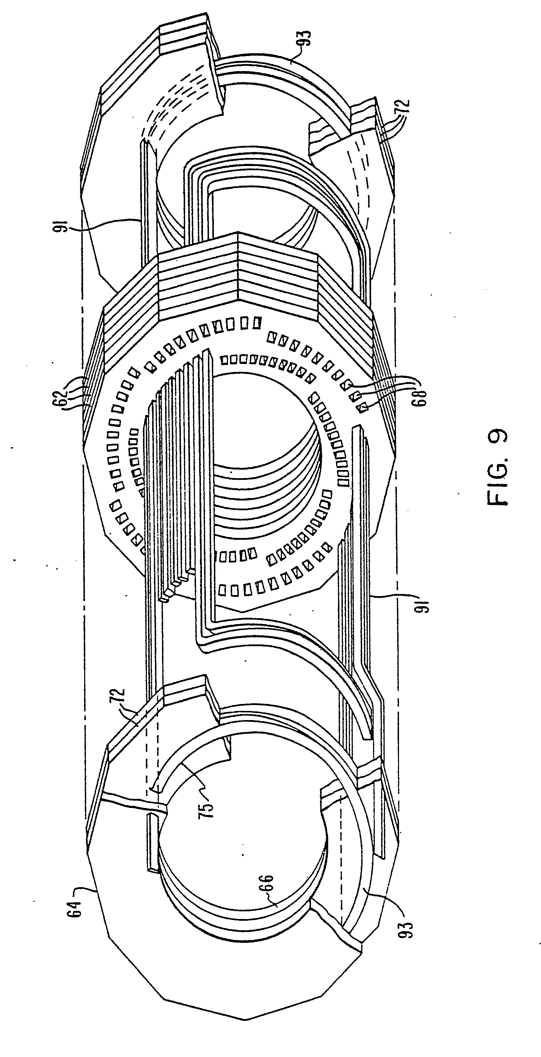

Figure 9 shows a stator coil support structure with end support plates 72 and center support plates 62 all of which are stacked with their central holes 66 coaxial and their rectangular holes 68 aligned. Some of the plates have been removed from the figure to clearly show the straight sections 91 and end sections 93 of the pancake coils along with the arc-shaped channels 75 in which the end sections 93 are disposed.

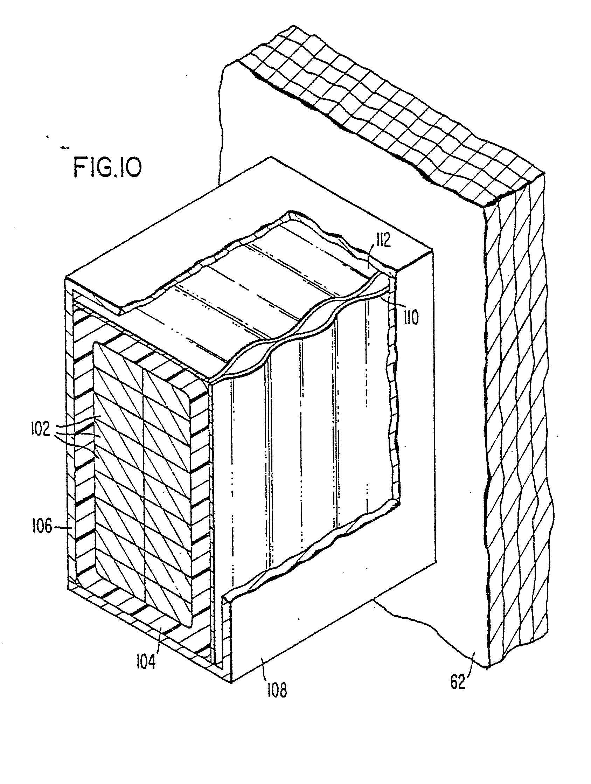

In order to allow a small amount of motion of the coil turns inside the rectangular holes 68, the rectangular holes are made slightly larger than the outside dimensions of the insulated coil turns. Figure 10 depicts the method by which this embodiment permits the coil turn to move a small relative distance within the rectangular holes while securing them sufficiently to avoid vibratory damage. The coil turn comprises a plurality of conductor elements 102 which are surrounded by an insulative barrier 104. Within each rectangular hole (68 in Figures 6, 7, 8 and 9), two L-shaped non-conductive elements (106 and 108) are associated to form a rectangular channel positioned adjacent to the inner walls of the rectangular channel formed by the plurality of rectangular holes aligned by the positioning of the plurality of insulative plates (shown in Figure 9). A spring 110 is disposed between the insulative covering 104 of the coil turn and one wall of the L-shaped element 108. Another spring 112 is disposed between the L-shaped channel 108 and another insulated surface of the coil turn. The two springs (110 and 112) are positioned such that they exert a force against two surfaces of the coil turn that are perpendicular to each other. They exert enough force to prevent vibratory motion of the coil turn but allow motion to accommodate differential thermal expansions.

It should be apparent that the present invention provides a novel stator coil support structure that provides support for the pancake coil structure while permitting small relative motions between individual coil turns and avoids the buildup of unnecessary stress in the conductors. Two preferred embodiments of the present invention have been set forth but it should be readily obvious to those skilled in the art that other embodiments are possible within the scope of the present disclosure. It should be further apparent that either of the two embodiments described above provides the desired result of completely encasing each of the individual pancake coils (12 in Figure 1) while further encasing the total stator coil assembly (10 in Figure 1). The encasement in either of the two described embodiments provides a generally rigid, non-conductive support structure while allowing for generally flexible support elements to be disposed immediately adjacent each individual turn of each pancake coil.

0056606

12

What we claim is:

1. A dynamoelectric machine comprising a frame structure, a stator structure, and a corresponding rotor, said stator structure having a plurality of conductive stator coils, each of said plurality of conductive stator coils being disposed within a substantially cylindrical stator winding assembly of said coils, each of said plurality of conductive stator coils comprising a plurality of conductive turns, and a substantially rigid insulative means for supporting said stator winding assembly, said rigid insulative supporting means providing support to said stator winding assembly in radial, tangential, and axial directions, and also preventing contact between adjacent ones of said plurality of conductive turns.

2. A machine as claimed in claim 1, wherein each of said plurality of conductive stator coils comprises an electrical conductor formed into a plurality of concentric turns.

3. A machine as claimed in claim 1 or 2, wherein said stator winding assembly comprises a cylindrical assembly of said conductive stator coils disposed in an overlapping structure wherein each of said stator coils spirals outwardly about a longitudinal axis of said cylindrical assembly of said conductive stator coils.

4. A machine as claimed in any one of claims 1 to 3, wherein said insulative supporting means comprises means for substantially encasing each of said plurality of stator coils, cylindrical insulative support means disposed radially inwardly from said stator winding assembly and cylindrical insulative support means disposed radially outwardly from said stator winding assembly.

5. A machine as claimed in claim 4, wherein said radially outwardly disposed insulative support means comprises a plurality of flat chordal surfaces formed in its cylindrical outer surface.

6. A machine as claimed in any one of claims 2 to 5, including flexible means for supporting each of said plurality of concentric turns, said flexible supporting means being disposed within said rigid support means and substantially surrounding each of said plurality of concentric turns.

7. A machine as claimed in any one of claims 1 to 6, wherein said insulative support means comprises a plurality of substantially circular flat insulative plates, each of said plates having a plurality of substantially rectangular holes therethrough, said plurality of circular flat insulative plates being stacked face to face with each one of said plurality of rectangular holes aligned coaxially with its corresponding one of said plurality of rectangular holes of its adjacent plates, said aligned rectangular holes forming a plurality of substantially rectangular channels running parallel to the longitudinal axis of said stator coil assembly.

8. A machine as claimed in claim 6 or 7, including the flexible means for supporting each of said plurality of concentric turns, said flexible means being disposed within said rigid support means adjacent each of said plurality of concentric turns.

9. A machine as claimed in any one of claims 1 to 8, in which said stator structure being supported by said frame structure, a plurality of electric coils, each of said coils comprising an electrical conductor formed into a plurality of concentric turns, each of said electric coils being disposed within a cylindrical assembly of said coils, said assembly being coaxial with said stator structure, a plurality of the rigid insulative means for supporting said electric coils, said insulative means supporting each one of said plurality of concentric turns independently of associated others of said plurality of concentric turns wherein said cylindrical assembly of coils is disposed about said cylindrical rotor with clearance between the outside diameter of said rotor and the inside diameter of said cylindrical assembly of coils, and wherein said insulative supporting means significantly restricts the motion of said plurality of turns.

10. A machine as claimed in claim 9, wherein each of said insulative supporting means comprises an inner skin, an outer skin and a webbing disposed between each adjacent pair of said plurality of turns, said inner skin being shaped in a section of a spiral and disposed radially inward from a preselected one of said plurality of electric coils, said outer skin being shaped in a section of a spiral and disposed radially outward from said preselected one of said plurality of electric coils, said webbing being disposed between and connected to both inner and outer skins.

11. A machine as claimed in claim 9 or 10, including an insulative cylinder disposed radially inward from said cylindrical assembly of said coils, said inward insulative cylinder supporting said plurality of insulative means for supporting said electric coils; and an insulative cylinder disposed radially outward from said cylindrical assembly of said coils, said outward insulative cylinder supporting said plurality of insulating means for supporting said electric coils.

12. A machine as claimed in claim 11, wherein said outwardly disposed insulative cylinder comprises a plurality of flat chordal surfaces.

13. A machine as claimed in any one of claims 9 to 12, wherein said plurality of insulative supporting means comprises a plurality of flat plates, each of said plates having a central hole therethrough, said central hole being larger than the outside diameter of said rotor, each of said plates having a plurality of smaller holes therethrough, each of said smaller holes large enough to accommodate a single one of said plurality of turns.

14. A machine as claimed in claim 13, wherein said plurality of flat plates are disposed in a stack structure with said central hole of each flat plate aligned coaxially with said central hole of each other flat plate.

15. A machine as claimed in claim 14, wherein the outer cylindrical surface of said stack structure comprises a plurality of flat chordal surfaces.

16. A method of supporting concentrically wound stator coils of a dynamoelectric machine comprising supporting each stator coil in a radially outward direction with an insulative inner skin, supporting each stator coil in a radially outward direction with an insulative outer skin, separating each turn of said concentrically wound stator coil from its adjacent turns with an insulative separator, attaching said insulative separator to said inner skin and to said outer skin, forming an insulative substantially rigid encasement about each of said stator coils, combining a plurality of said encasements in an overlapping association to form a cylindrical assembly, said assembly having an inside diameter and an outside diameter, supporting said cylindrical assembly in a radially outward direction with a substantially rigid insulative cylinder, supporting said cylindrical assembly in a radially inward direction with a substantially rigid insulative cylinder, and forming the outer cylindrical surface of the outwardly supporting rigid insulative cylinder into a plurality of flat chordal surfaces.

17. A method as claimed in claim 16, including producing a plurality of circular flat insulative plates, each plate having a hole therethrough, said hole located centrally on its flat surfaces, producing a plurality of smaller holes through the flat surfaces of each of said flat insulative plates, stacking said plurality of plates with their flat surfaces substantially parallel to each of the flat surfaces of the other plates, aligning said stack of plates with all of the central holes forming a hollow cylindrical structure, disposing said stator coils within said plurality of holes through the flat surfaces of a preselected plurality of flat plates, and forming the cylindrical outer surface of said stacks into a plurality of flat chordal surfaces.

FIG.1

FIG.2

FIG.3

FIG.4A

FIG.4B

FIG.4C

FIG.4D

FIG.5

FIG.6

68
64
66
62

FIG.7

68
64
75
66
72

FIG.8

FIG. 9

FIG.10

112

110

102

106

104

108

62

## European Patent Office

## EUROPEAN SEARCH REPORT

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US - A - 3 761 752 (ANDERSON)<br><br>* column 4, lines 1-68; column 5, lines 1-8; figures 2-11 *<br><br>--- | 1,4,7,<br>9,11,<br>13,14,<br>16,17 | H 02 K 3/47<br>3/04 |
| X | US - A - 3 082 337 (HORSLEY)<br><br>* column 2, lines 52-72; column 3, lines 1-62; column 4, lines 1-11; figures 4-6 *<br><br>--- | 1,4,9,<br>10,16 | |
| A | US - A - 3 821 568 (GILLET)<br><br>* column 1, lines 46-59; column 2, lines 18-28; figures 1,2 *<br><br>--- | 1,2 | **TECHNICAL FIELDS SEARCHED (Int.Cl. 3)**<br><br>H 02 K |
| A | ELEKTROTECHNIK UND MASCHINENBAU, volume 92, no. 6, June 1975 VIENNA (AU), NEW YORK (US) G. AICHHOLZER: "Neue Lösungswege zum Entwurf grosser Turbogeneratoren bis 2GVA, 60kV", pages 249-255<br><br>* page 251, right-hand column, lines 31-58; figure 3 *<br><br>--- | 2,3,<br>10,11 | |
| A | US - A - 3 827 141 (HALLERBACK)<br><br>* column 5, lines 3-6; column 7, lines 16-22; figures 2,7 *<br><br>--- | 5,12,<br>15-17<br><br>./. | |

| | | |
|---|---|---|
| The present search report has been drawn up for all claims | | |
| Place of search | Date of completion of the search | Examiner |
| The Hague | 25-03-1982 | TIO |

EPO Form 1503.1  06.78

**European Patent Office**

## EUROPEAN SEARCH REPORT

### DOCUMENTS CONSIDERED TO BE RELEVANT

| Category | Citation of document with indication, where appropriate, of relevant passages | Relevant to claim |
|---|---|---|
| A | US - A - 4 137 471 (MASAKI SATO et al.)<br><br>* column 3, lines 15-53; column 4, lines 41-59; figures 1,3 *<br><br>--- | 6,8 |
| A | FR - A - 1 594 872 (GUIMBAL)<br><br>* page 3, lines 3-10; figure 4 *<br><br>--- | 6,8 |
| A | US - A - 3 444 407 (YATES)<br><br>* column 2, lines 12-32; figure 3 *<br><br>--- | 6,8 |
| D/A | US - A - 4 151 433 (FLICK)<br><br>* figures 2,3 *<br><br>--- | 1 |
| A | US - A - 4 164 672 (FLICK)<br><br>* figures 2,6 *<br><br>--------- | 1 |

**CLASSIFICATION OF THE APPLICATION (Int. Cl.³)**

**TECHNICAL FIELDS SEARCHED (Int. Cl.³)**

EPO Form 1503.2 06.78